(19) **Europäisches Patentamt**

**European Patent Office**

**Office européen des brevets**

(11) **EP 0 872 172 B1**

(12) **FASCICULE DE BREVET EUROPEEN**

(45) Date de publication et mention
de la délivrance du brevet:
**29.11.2000 Bulletin 2000/48**

(51) Int Cl.⁷: **A01G 25/02**, B29C 47/02

(21) Numéro de dépôt: **98106765.5**

(22) Date de dépôt: **14.04.1998**

(54) **Procédé de fabrication d'un tuyau d'irrigation goutte-à-goutte et goutteur utilisé dans ce tuyau**

Verfahren zum Herstellen eines Tropfbewässerungsschlauches und Tropfer zum Verwenden in einem derartigen Schlauch

Method for manufacturing a dripper irrigation tube and dripper used in such a tube

(84) Etats contractants désignés:
**AT CH DE ES FR GB GR IT LI NL PT**

(30) Priorité: **18.04.1997 EP 97106456**

(43) Date de publication de la demande:
**21.10.1998 Bulletin 1998/43**

(73) Titulaire: **Swisscab S.A.**
**1462 Yvonand (CH)**

(72) Inventeur: **Buluschek, Bruno**
**1026 Echandens (CH)**

(74) Mandataire: **Ravenel, Thierry Gérard Louis et al**
**I C B,**
**Ingénieurs Conseils en Brevets SA,**
**7, rue des Sors**
**2074 Marin (CH)**

(56) Documents cités:
**EP-A- 0 715 926       US-A- 5 163 622**
**US-A- 5 324 379**

## Description

La présente invention est relative à la fabrication de tuyaux d'irrigation goutte-à-goutte.

Comme cela est bien connu, de tels tuyaux sont percés de distance en distance de petits trous par lesquels l'eau peut s'écouler dans le sol avec un faible débit. Ce débit est fixé par des limiteurs de débit appelés "goutteurs" montés à l'intérieur du tube au droit des trous et présentant la forme d'un petit bloc collé à la surface intérieure du tuyau. La limitation du débit est assurée par un labyrinthe formé dans le bloc. Une description d'un tel "goutteur" peut être trouvée dans la demande de brevet EP 0 715 926 déposée par la Demanderesse de la présente demande de brevet.

Un procédé de fabrication de tuyaux d'irrigation goutte-à-goutte est connu du brevet US 5 324 379. Il consiste à amener les goutteurs à l'intérieur du tuyau pendant que celui-ci est formé dans une extrudeuse ou un poste d'extrusion, les goutteurs étant collés sur la paroi intérieure du tuyau par thermosoudage, lorsque celui-ci est encore chaud à la sortie de l'extrudeuse. Pour cela, les goutteurs sont introduits dans le tuyau en formation en étant tirés par un fil dont ils sont rendus solidaires longitudinalement en des points séparés les uns des autres par une distance égale à la distance qui va les séparer dans le tuyau une fois fini. Le brevet US cité prévoit plusieurs variantes pour solidariser les goutteurs sur le fil. L'une de ces variantes, représentée sur les figures 9 à 14 du document, consiste à faire des noeuds dans le fil et à munir chaque goutteur d'une patte d'entraînement fendue s'étendant transversalement à la direction de propagation du goutteur dans l'installation. Derrière ces pattes, les noeuds du fil peuvent se bloquer afin qu'un goutteur donné puisse être entraîné par celui qui le précède et qui est déjà rendu solidaire du tuyau dans la filière de l'extrudeuse.

Le fil est noué dans un poste de nouage qui prend un bout du fil pour constituer chaque noeud, ce poste étant situé en amont d'un poste distribuant les goutteurs.

Cette méthode présente un inconvénient grave qui réside dans le fait qu'elle ne peut être qu'intermittente, c'est-à-dire que pour former les noeuds, il faut arrêter le fil à chaque fois. Ceci a une influence directe sur la vitesse globale de fabrication du tuyau. Les autres variantes décrites dans ce brevet américain et permettant de solidariser les goutteurs sur le fil présentent toutes le même inconvénient, l'auteur du document envisageant même de préparer à l'avance des fils munis de goutteurs et de les enrouler sur des bobineaux de réserve. Outre le risque de voir le fil et les goutteurs s'emmêler lors du déroulage du bobineau, on est obligé d'arrêter périodiquement le procédé de fabrication pour remplacer un bobineau vide par un bobineau plein chargé d'un fil avec des goutteurs, opération qui n'est guère plus satisfaisante que celles impliquées dans les autres variantes décrites.

L'invention a donc pour but de fournir un procédé de fabrication de tuyaux d'irrigation goutte-à-goutte dépourvus des inconvénients précités et permettant d'éviter toute opération intermittente au cours du processus de fabrication d'un tuyau d'irrigation.

L'invention a donc pour objet un procédé tel que défini dans les revendications 1, 12 et 14 ainsi qu'un goutteur tel que défini dans la revendication 16.

Il résulte des caractéristiques de ce procédé que les goutteurs sont rendus solidaires du fil au cours d'une opération qui peut se faire pendant que les goutteurs progressent en continu vers l'extrudeuse. Cette opération peut se faire à la même vitesse que celle à laquelle le tuyau est formé, le fil étant également amené à cette même vitesse.

D'autres caractéristiques et avantages de l'invention apparaîtront au cours de la description qui va suivre, donnée uniquement à titre d'exemple et faite en se référant aux dessins annexés sur lesquels :

- la figure 1 est une vue en perspective d'un tronçon de tuyau d'irrigation goutte-à-goutte selon l'invention;
- la figure 2 est également une vue en perspective, à plus grande échelle, d'un goutteur utilisé dans le tuyau d'irrigation selon l'invention;
- les figures 3A et 3B représentent par des vues schématiques partielles et en élévation latérale, une installation permettant de mettre en oeuvre le procédé de fabrication d'un tuyau d'irrigation selon l'invention;
- la figure 4 est une vue en coupe transversale et à grande échelle, prise selon la ligne IV-IV de la figure 3A;
- la figure 5 est une vue en coupe transversale prise selon la ligne V-V de la figure 3B et à la même échelle que celle-ci,
- la figure 6 représente une variante de réalisation d'un poste de mise en attente permettant la mise en oeuvre du procédé de l'invention; et
- la figure 7 est une variante de réalisation de l'installation permettant la mise en oeuvre du procédé de l'invention.

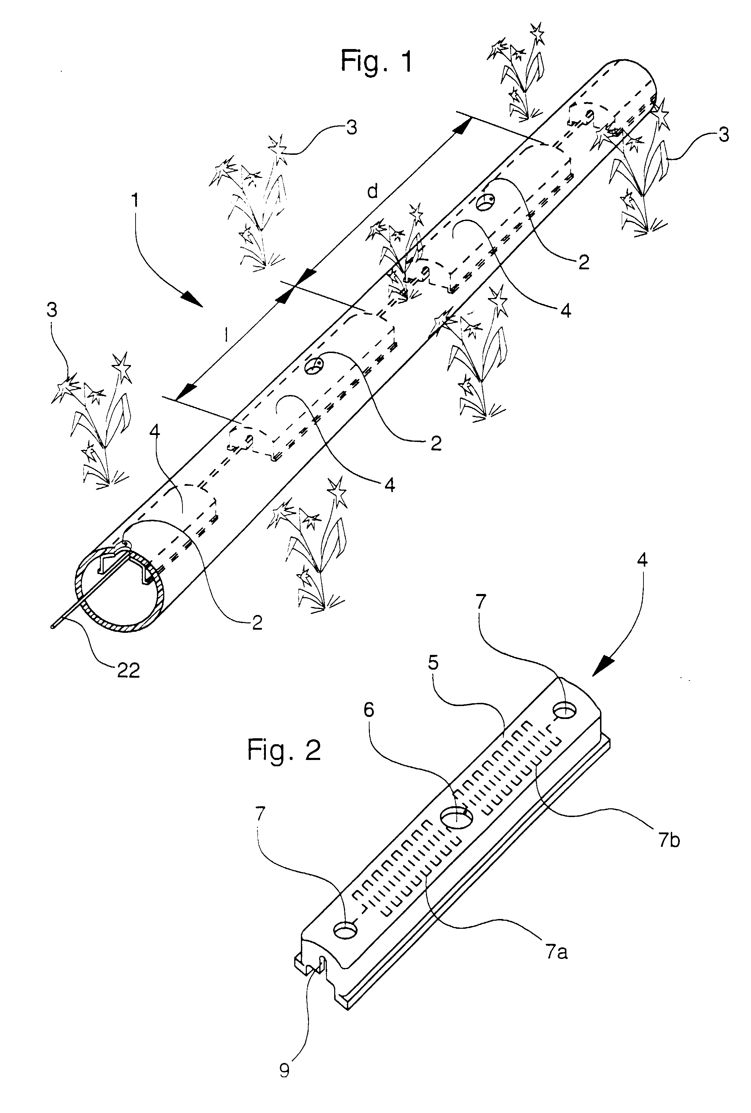

La figure 1 montre un tuyau d'arrosage ou d'irrigation 1, en matière plastique, par exemple du polyéthylène , qui présente, de proche en proche, des trous 2 par lesquels l'eau peut s'écouler avec un faible débit pour arroser des végétaux 3. Des goutteurs 4 sont fixés à l'intérieur du tuyau 1 au droit de chaque trou 2, leur structure apparaissant plus clairement sur la figure 2.

Chaque goutteur 4 se présente sous la forme générale d'un petit bloc creux allongé en matière plastique de forme générale parallélépipédique dont la surface 5, destinée à être contiguë à la paroi du tuyau 1, est incurvée pour épouser cette paroi une fois que le goutteur 4 est mis en place. Dans cette surface 5 est formée une chambre de collecte 6 qui communique avec un trou 2 du tuyau 1 et avec des passages 7 débouchant dans la cavité 8 (visible seulement sur la figure 4) délimitée par le bloc du goutteur 4. Dans la surface 5 sont également creusés des canaux formant labyrinthe 7a et 7b reliant la chambre de collecte 6 aux passages 7.

Dans le tube terminé, les goutteurs 4 sont fixés, de préférence par thermosoudage, par toute leur surface 5 sur la face interne du tuyau 1. La chambre de collecte 6 débouche alors dans le trou 2 par où l'eau peut s'écouler à un débit déterminé par construction à travers le labyrinthe formé par les canaux 7a et 7b.

Selon l'invention, chaque goutteur 4 présente deux encoches 9 prévues dans des pattes formées, dans l'exemple, par les parois d'extrémité respectives délimitant la cavité 8 dans le goutteur 4. Chaque encoche 9 s'ouvre vers l'intérieur du tuyau 1 lorsque le goutteur 4 y est monté en place. On verra par la suite que la largeur de cette encoche 9 est définie avec soin pour remplir l'une des fonctions essentielles de l'invention. Il est à noter que, selon une variante, le corps du goutteur 4 pourrait présenter seulement une encoche 9 ou, éventuellement, plus de deux encoches réparties sur sa longueur dans des parois ou cloisons transversales traversant la cavité 8.

On notera sur la figure 1 que la longueur de chaque goutteur 4 est désignée par 1, tandis que le pas avec lequel les goutteurs 4 se répètent dans le sens longitudinal du tuyau 1 est indiquée par d.

On va maintenant décrire le procédé et l'installation permettant de fabriquer un tuyau tel que celui représenté sur les figures 1 et 2.

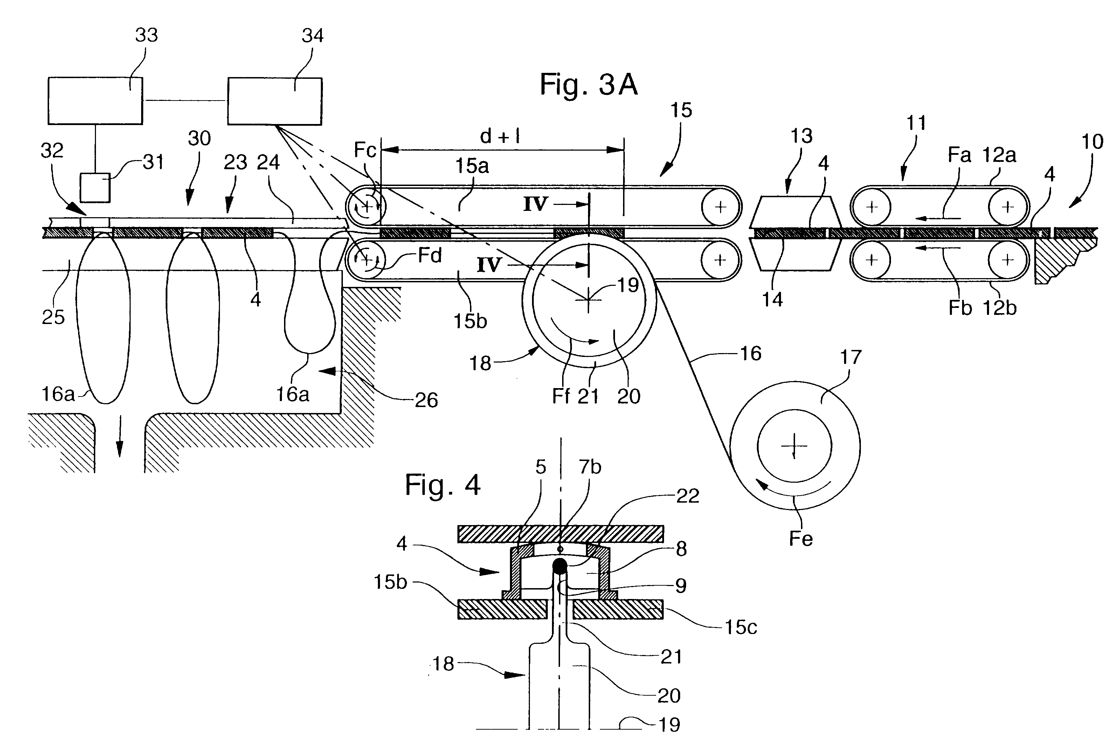

Des goutteurs 4 de la forme représentée sur la figure 2 et fabriqués à l'avance, sont amenés en 10 (figure 3A), par exemple à partir d'un bol vibreur bien connu (non représenté sur les dessins). Positionnés longitudinalement, ils suivent un trajet rectiligne en se succédant et en étant en contact les uns des autres. Ils sont ainsi introduits dans un premier poste de convoyage ou chenille 11. Cette chenille 11 comprend une courroie sans fin supérieure 12a et une courroie sans fin inférieure 12b dont les brins inférieur et supérieur respectifs sont parallèles et maintenus écartés l'un de l'autre d'une distance légèrement inférieure à l'épaisseur d'un goutteur 4. Les courroies 12a et 12b étant par conséquent entraînées de manière que leurs brins respectifs inférieur et supérieur se déplacent dans le sens des flèches Fa et Fb, les goutteurs 4 sont entraînés longitudinalement (vers la gauche sur la figure 3A). La chenille 11 est destinée à imprimer aux goutteurs 4 une vitesse de progression prédéterminée qui est de préférence fixée par la relation suivante:

$$V_{ch11} = V_1 * l/d$$

dans laquelle :

$V_{ch11}$ vitesse d'avance chenille 11,
$V_1$ vitesse de fabrication du tuyau 1,
l, d valeurs des distances indiquées plus haut

La première chenille 11 est suivie d'un guide de transfert 13 formé par un bloc dans lequel est ménagé un passage 14 ayant une section rectangulaire transversale sensiblement égale à la section transversale d'un goutteur 4.

Le guide 13 est suivi d'un poste de solidarisation 15 des goutteurs 4 sur un fil 16. Ce poste 15, appelé seconde chenille par la suite, comprend trois courroies sans fin 15a, 15b et 15c (voir aussi la figure 4), à savoir une courroie supérieure 15a et deux courroies inférieures 15b et 15c, ces dernières étant placées côte-à-côte en-dessous de la courroie supérieure 15a et ayant chacune une largeur un peu inférieure à la largeur de cette dernière. La courroie supérieure 15a est entraînée dans le sens de la flèche Fc et les courroies inférieures 15b et 15c sont entraînées dans le sens de la flèche Fd. Le brin inférieur de la courroie 15a est situé à distance des brins supérieurs des courroies inférieures 15b et 15c, de manière à ménager un intervalle entre eux dont la hauteur est quelque peu inférieure à l'épaisseur d'un goutteur 4.

La longueur active de la seconde chenille 15 est de préférence égale à environ la somme de la longueur 1 et de la distance d telles que définies ci-dessus.

Le fil 16 est dévidé d'une bobine 17 dans le sens de la flèche Fe. Il peut avoir un diamètre de 0,5 mm par exemple, et être réalisé en matière plastique telle que le polyéthylène ou le polypropylène.

Le poste de solidarisation ou seconde chenille 15 comprend également une roue d'insertion 18 montée à rotation dans le sens de la flèche Ff autour d'un axe 19 transversal à la direction de progression des goutteurs 4. Cette roue 18 est formée d'un disque 20 (figure 4) présentant un bord aminci 21 dont la tranche est conformée de manière à présenter une rainure concave circulaire 22 d'un rayon correspondant sensiblement au rayon de la section du fil 16. L'épaisseur du bord 21 est de préférence de 0,4 mm.

La roue d'insertion 18 est placée relativement à la seconde chenille 15 de sorte que sa partie périphérique évolue en rotation entre les courroies inférieures 15b et 15c, et que la rainure 22 soit située au-dessus du plan formé par les brins supérieurs de ces courroies. Par ailleurs, les encoches 9 formées dans les parois d'extrémité des goutteurs 4 ont une largeur qui est inférieure au diamètre du fil 16. Ainsi, suivant un aspect essentiel de l'invention, le fil 16, en passant sur la roue d'insertion 18, est inséré dans les encoches 9 de chaque goutteur 4 qui passe entre les courroies 15a, 15b et 15c, ce qui se voit clairement sur la figure 4. Cette insertion provoque le coincement du fil 16 dans ces encoches 9 et ainsi la solidarisation entre le fil 16 et le goutteur 4. On notera que pour faciliter l'insertion, l'encoche 9 s'élargit en direction de la roue 18.

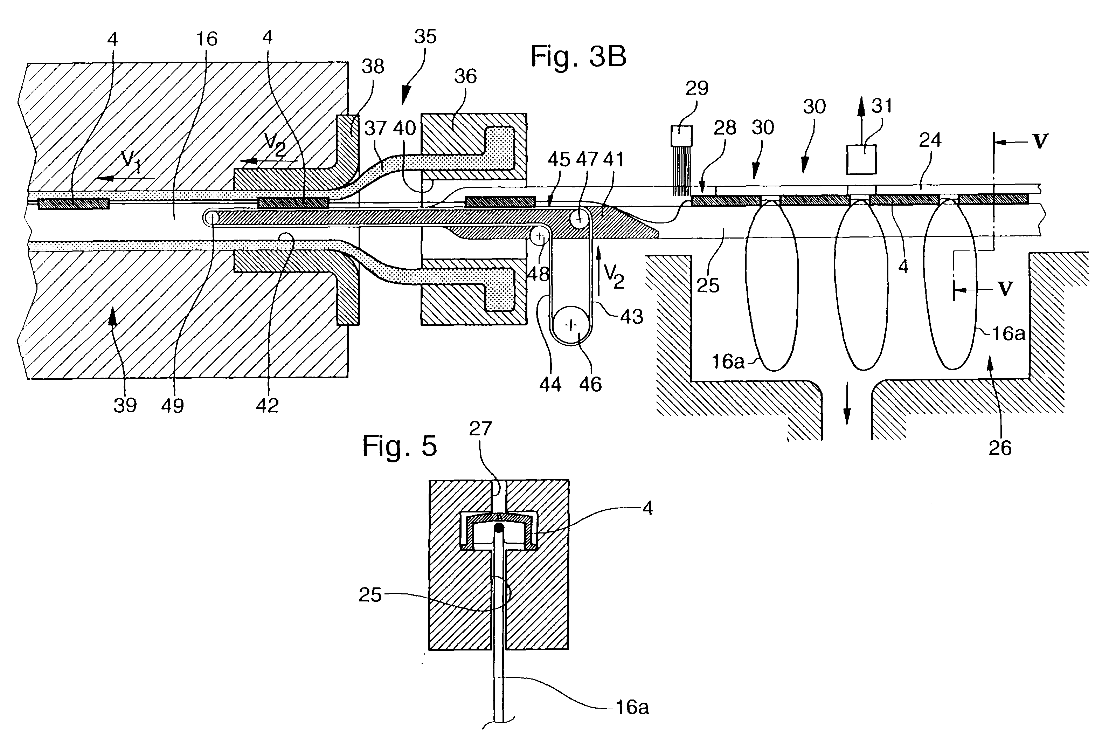

La seconde chenille 15 est suivie d'un poste de mise en attente 23 dont une première partie apparaît sur la figure 3A, et une seconde partie sur la figure 3B. Ce poste de mise en attente 23 est essentiellement formé d'une règle 24 disposée longitudinalement dans la direction d'avancement des goutteurs 4. Elle présente sur toute sa longueur une rainure longitudinale 25 à section en forme de T inversé dont la barre transversale a sensiblement la même section qu'un goutteur 4. En bas de la règle 24, la rainure 25 débouche dans un volume délimité par un caisson 26 dans lequel est maintenue une dépression par aspiration (non représentée). En haut de la règle 24, la rainure 25 communique avec l'atmosphère à travers des orifices 27 prévus de proche en proche afin d'assurer un courant d'air à travers le caisson 26. A l'extrémité aval de la règle 24, la rainure 25 s'ouvre vers le haut à travers une ouverture 28 de plus grande dimension pour laisser passage à une brosse 29 suspendue au-dessus de la règle 24 de manière à obstruer la rainure 25. Ainsi, la brosse 29 fait office de frein le passage vers l'aval des goutteurs 4 étant empêché par la brosse 29 qui ne cède que si une traction suffisante est exercée sur ceux-ci.

Selon un autre aspect essentiel de l'invention, le poste de mise en attente 23 permet de former une queue d'attente 30 constituée d'un nombre prédéterminé de goutteurs 4 qui, en étant arrêtés par le frein ou brosse 29, s'accumulent les uns derrière les autres dans la règle 24, pendant que le fil 16 forme des boucles 16a comme représenté sur les figures 3A, 3B et 5.

Le poste de mise en attente 23 comporte également un capteur 31 capable, à travers une autre ouverture 32 faisant communiquer la rainure 25 avec l'air libre, de détecter la présence d'un goutteur 4 à cet endroit et de compter le nombre de goutteurs 4 se trouvant dans le poste de mise en attente 23. Le capteur 31 est connecté à un dispositif de commande 33 chargé de réguler, en fonction du nombre de goutteurs 4 se trouvant dans le poste d'attente 23, la vitesse d'un moteur d'entraînement 34 des courroies 15a, 15b et 15c et de la roue d'insertion 18 dans le poste de solidarisation 15. Le couplage mécanique entre le moteur 34 et les courroies 15a, 15b et 15c est représenté par des traits mixtes sur la figure 3A.

La vitesse de défilement des goutteurs 4 dans le poste de solidarisation 15 est ajusté à une valeur $V_D$ égale à la vitesse $V_2$ d'extrusion du tube 1 majorée ou diminuée d'une valeur de correction variable C en fonction du signal fourni par le capteur 31. Par ailleurs, la longueur des courroies 15a, 15b et 15c est choisie sensiblement égale à la valeur d+l (voir figure 1). Ces dispositions permettent de maintenir toujours un nombre déterminé de goutteurs 4 dans la queue d'attente 30.

L'installation selon l'invention comporte également un poste d'extrusion 35. Ce poste comporte une tête d'extrusion 36 recevant de la matière plastique fondue d'une chambre de fusion (non représentée), et délivrant une ébauche de tuyau 37 à une filière ou calibreur 38. De là, le tuyau 1 formé passe dans un poste de refroidissement 39, puis dans un poste de tirage régulé et dans un poste de perçage (non représentés). Dans ce dernier, le tuyau 1 refroidi est percé de proche en proche au droit des chambres de collecte 6 des goutteurs 4. Ces trois postes de l'installation étant bien connus des spécialistes, ils ne sont pas décrit en détail ici.

La tête d'extrusion 35 est traversée par un passage 38 à travers lequel s'étend une tablette 39 de support des goutteurs 4. De même, la filière 38 présente un passage central 40 dans lequel s'étend la partie aval de la tablette 39. Celle-ci est destinée d'abord à permettre le transfert des goutteurs 4 vers la filière 37 et, dans celle-ci, à assurer une pression d'application des goutteurs 4 contre la paroi interne de l'ébauche de tuyau 1, cette pression garantissant un bon thermosoudage des goutteurs 4 à la paroi du tuyau 1.

Selon un autre aspect important de l'invention, la tablette 41 est équipée d'une troisième chenille 43 formée d'une courroie sans fin 44 dont le brin supérieur passe dans une rainure longitudinale 45 de la tablette 41, de manière que sa surface supérieure soit à fleur de la surface supérieure de celle-ci. La courroie sans fin 44 passe également sur un dispositif moteur 46 et sur des galets de renvoi 47, 48 et 49, tandis que le brin inférieur passe dans une rainure 50 pratiquée dans la surface inférieure de la tablette 41. Le dispositif moteur 46 est agencé pour entraîner la troisième chenille 43 à la vitesse $V_2$ d'extrusion du tuyau 1.

La troisième chenille 43 apporte un avantage particulier, surtout lorsque la paroi du tuyau 1 présente une épaisseur relativement faible. En effet, la troisième chenille 43 est à même de réduire considérablement le frottement subi par les goutteurs 4 en raison de leur glissement sur la tablette 41, lorsqu'ils passent dans la zone du calibreur 38 où ils sont fixés sur le tuyau 1. Ceci est important dans la mesure où le tuyau 1 doit transmettre la force de traction aux goutteurs 4 et au fil 16 permettant leur cheminement depuis la queue d'attente 30, la pression avec laquelle les goutteurs 4 sont amenés à adhérer à chaud dans la paroi du tuyau 1 pouvant être relativement importante.

En résumé, on constate que, grâce au procédé selon l'invention, la fabrication du tuyau d'irrigation peut se dérouler sans aucune discontinuité, notamment sans accélération, ni décélération inopportunes des éléments en mouvement de l'installation et du tuyau en formation.

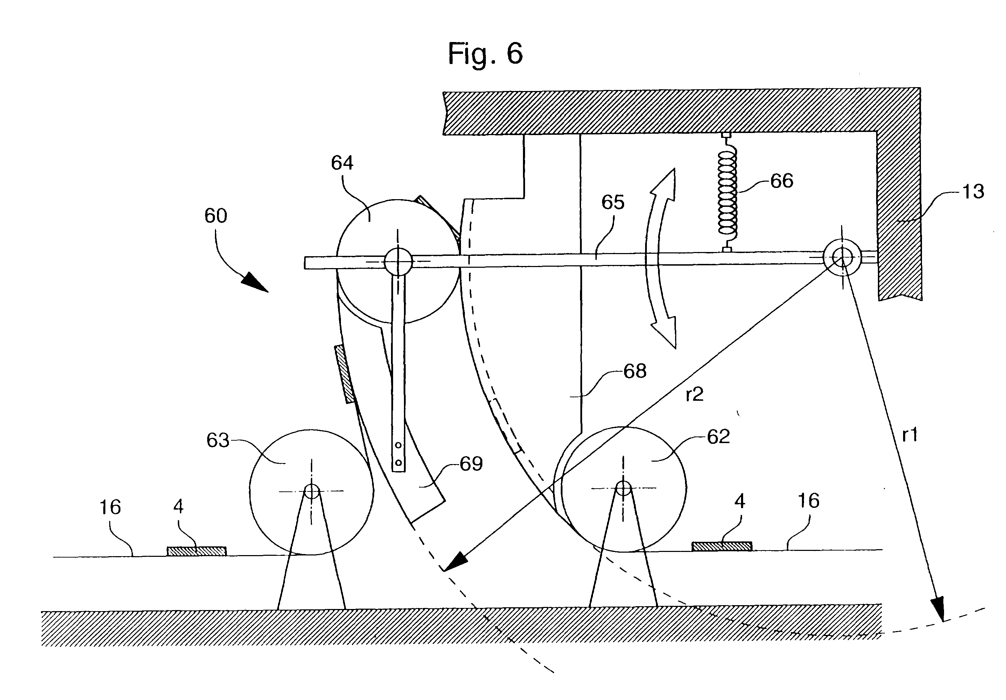

On notera que selon une variante de réalisation de l'installation, le poste de mise en attente 23 peut être remplacé par un dispositif de pantin 60 tel que représenté sur la figure 6. Ce pantin 60 comprend classiquement deux poulies fixes 62 et 63 entre lesquelles est intercalée une poulie mobile 64 reliée à une première extrémité d'un bras 65 articulé par son deuxième extrémité sur un bâti B.

Le bras 65 est rappelé pour s'éloigner des poulies fixes grâce à des moyens de rappel 66 formés par un ressort. Ces moyens de rappel 66 peuvent également être formés par un contrepoids fixé par rapport à l'axe d'articulation du bras 65 sur une partie opposée à celle portant la partie mobile 64. Le fil 16 portant les goutteurs 4 provenant de la seconde chenille 15 est donc dévié par la poulie fixe 62 enroulé sur la poulie mobile 64, et à nouveau dévié vers le poste d'extrusion 36 par la deuxième poulie fixe 63. Le dispositif de pantin 60 est associé à des premiers moyens de guidage 68 fixés sur le bâti B, et à des seconds moyens de guidage 69 mobiles, solidaires du bras 65. Les moyens de guidage fixes 68 sont disposés entre la première poulie fixe 62 et la poulie mobile 64, tandis que les moyens de guidage mobiles 69 sont disposés entre la poulie mobile 64 et la deuxième poulie fixe 63. Ces moyens de guidage 68, 69 sont essentiels pour empêcher toute rotation des goutteurs 4 sur eux-mêmes avant l'entrée dans le poste d'extrusion. Grâce à ce dispositif de pantin 60, la vitesse de défilement des goutteurs 4 peut être ainsi ajustée en fonction de la vitesse d'extrusion.

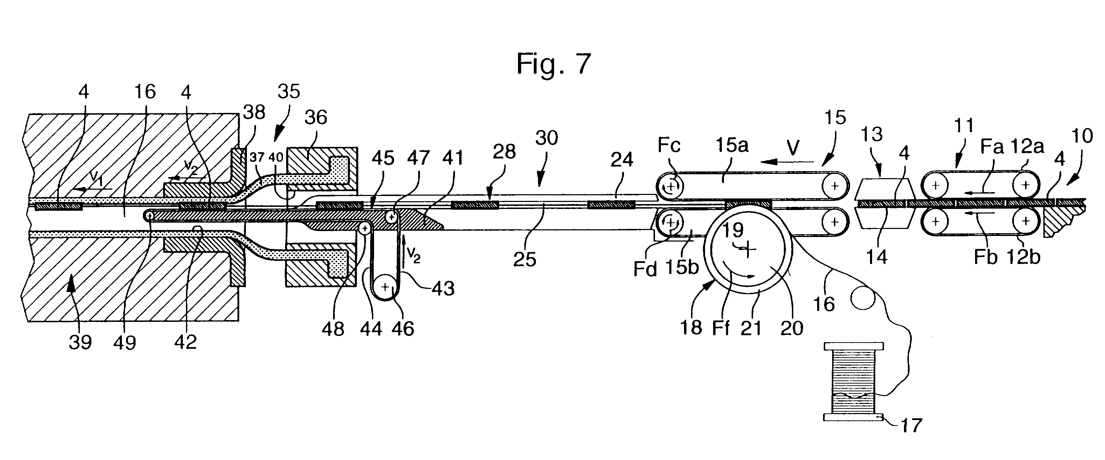

On a représenté à la figure 7 une autre variante de réalisation de l'installation dans laquelle les mêmes éléments que ceux décrits en liaison avec les figures précédentes sont désignés par les mêmes références numériques.

Selon cette variante, le poste de mise en attente 23 a été omis et remplacé par une rainure longitudinale similaire à la rainure 25 décrite en liaison avec les figures 3A et 3B. La chenille 15 a en outre été raccourcie de manière à ce qu'au plus un seul goutteur 4 à la fois soit entraîné par les courroies 15a et 15b. Typiquement, la longueur active de la chenille 15 est égale à trois fois la longueur d'un goutteur 4. Dans cette variante, le fil 16 est dévidé de la bobine 17 sans tension par exemple à la défilée. Le fil 16 portant les goutteurs 4 n'est donc entraîné que par le tuyau qui vient d'être formé auxquels les goutteurs sont fixés. Cela est rendu possible dans la mesure où le fil est dévidé sans tension de la bobine 17, où les goutteurs sont d'un poids très faible et où le coefficient de frottement des goutteurs dans la rainure 25 est très faible. Ainsi, lors de l'encliquetage du fil sur le goutteur, ce dernier est entraîné par la chenille 15 à une vitesse V sensiblement supérieure à V1 ou V2. Comme V est supérieure à V1 ou V2, un petit mou est créé dans le fil entre la chenille 15 et le poste d'extrusion. Dès que le goutteur qui est fixé sur le fil sort de la chenille 15, le fil portant les goutteurs 4 n'est entraîné que par le tuyau à la vitesse V2. La chenille 15 n'entraîne donc que le goutteur 4 avant et après sa fixation sur le fil, mais jamais le fil seul.

## Revendications

1. Procédé de fabrication d'un tuyau d'irrigation goutte-à-goutte (1), consistant à :

   - fabriquer des goutteurs (4),

   - rendre lesdits goutteurs (4) solidaires longitudinalement d'un fil (16) en les positionnant de distance en distance le long de celui-ci,

   - introduire ledit fil (16) à l'intérieur dudit tuyau (1) pendant que celui-ci est formé dans une extrudeuse ou poste d'extrusion (36, 38) de manière à y amener les goutteurs (4) les uns après les autres,

   - fixer à chaud lesdits goutteurs (4) à la paroi intérieure du tuyau (1) au fur et à mesure de sa formation, la solidarisation permettant de faire progresser le fil (16) et les goutteurs en même temps que le tuyau (1), et

   - refroidir ledit tuyau (1) et percer celui-ci au droit de chaque goutteur (4) pour le faire communiquer avec l'extérieur,

   - ledit procédé étant caractérisé en ce qu'il consiste également à :

   - munir lesdits goutteurs (4) de moyens de coincement (9) pendant leur fabrication, et

   - insérer ledit fil (16) dans lesdits moyens de coincement (9) afin d'obtenir la solidarisation des goutteurs (4) dudit fil (16) avant son introduction dans ledit tuyau (1).

2. Procédé suivant la revendication 1, caractérisé en ce que lesdits moyens de coincement (9) comprennent au moins une patte venue de formage avec le corps du goutteur (4) du côté de ce corps opposé à la paroi (5) par laquelle il adhérera audit tuyau (1) et transversalement à la direction de progression dudit fil (16) pendant la formation dudit tuyau (1), ladite patte étant pourvue d'une encoche (9) dont la largeur est inférieure au diamètre dudit fil (16).

3. Procédé suivant la revendication 2, caractérisé en ce que la largeur de ladite encoche (9) est fixée sensiblement à 0,8 fois le diamètre dudit fil.

4. Procédé suivant l'une quelconque des revendications 2 et 3, caractérisé en ce qu'il consiste également à :

   - amener lesdits goutteurs (4) en succession dans une première chenille (15) comportant une courroie supérieure (15a) et deux courroies inférieures (15b, 15c) animées de mouvements conjugués, lesdites courroies inférieures (15b, 15c) étant placées côte-à-côte en dessous de la courroie supérieure (15a) et lesdits goutteurs (4) étant insérés dans l'intervalle entre ces courroies,

   - dévider ledit fil d'une bobine (17) en le faisant passer sur une partie de la périphérie d'une roue d'insertion (18) dont le bord périphérique (21) est concave sur la tranche (22) et qui dépasse dans ledit intervalle entre les deux courroies inférieures et qui est animée d'un mouvement de rotation coordonnée aux mouvement desdites courroies (15a, 15b , 15c),

- lesdits goutteurs (4) cheminant dans ledit intervalle en étant positionnés de manière que ladite encoche (9) chevauche ledit bord périphérique (21) de telle sorte que ledit fil (16) soit coincé dans l'encoche de chaque goutteur lorsque celui-ci passe au-dessus de ladite roue (18).

**5.** Procédé suivant la revendication 4, caractérisé en ce que 1 étant la longueur de chaque goutteur (4) et d le pas avec lequel lesdits goutteurs se répètent dans le sens longitudinal du tuyau (1), la longueur de ladite première chenille (15) est sensiblement égale à 1+d.

**6.** Procédé suivant l'une quelconque des revendications 1 à 5, caractérisé en ce qu'il consiste également à former une queue d'attente (30) constituée d'un nombre prédéterminé de goutteurs (4), après leur solidarisation dudit fil (16) et préalablement à leur introduction dans ledit tuyau (1).

**7.** Procédé suivant les revendications 4 et 6 prises ensemble, caractérisé en ce qu'il consiste également à :

- surveiller le nombre des goutteurs (4) placés dans ladite queue d'attente (30); et
- faire varier la vitesse de cheminement des goutteurs (4) dans ladite première chenille (15) et celle dudit fil (16) sur ladite roue (18) en fonction de ce nombre.

**8.** Procédé suivant la revendication 7, caractérisé en ce que ladite vitesse de cheminement est égale à la vitesse d'extrusion dudit tuyau (1) minorée ou majorée d'un facteur de correction défini en fonction dudit nombre de goutteurs dans la queue d'attente (30).

**9.** Procédé suivant l'une quelconque des revendications 5 à 8, caractérisé en ce qu'il consiste également à :

- introduire lesdits goutteurs (4) dans ladite première chenille (15) à une vitesse sensiblement égal à $V=V_1*l/d$ , $V_1$ étant la vitesse de progression avec laquelle ledit tuyau (1) subit ladite opération de refroidissement.

**10.** Procédé suivant l'une quelconque des revendications 1 à 9, caractérisé en ce qu'il consiste également à :

- faire progresser lesdits goutteurs (4) dans ladite extrudeuse (36, 38) sur une seconde chenille (43) traversant longitudinalement celle-ci et s'étendant sensiblement entre l'entrée de cette extrudeuse et un point où lesdits goutteurs (4) adhèrent à la paroi intérieure dudit tuyau (1); et

- faire cheminer ladite chenille (43) à une vitesse sensiblement égale à la vitesse d'extrusion dudit tuyau (1).

**11.** Procédé suivant la revendication 10, caractérisé en ce qu'il consiste également à presser lesdits goutteurs (4) dans ladite paroi sur une distance prédéterminée à l'aide de ladite seconde chenille (43).

**12.** Procédé de fabrication d'un tuyau d'irrigation goutte-à-goutte consistant à :

- fabriquer des goutteurs (4),
- rendre lesdits goutteurs (4) solidaires longitudinalement d'un fil (16) en les positionnant de distance en distance le long de celui-ci,
- introduire ledit fil (16) à l'intérieur dudit tuyau (1) pendant que celui-ci est formé dans une extrudeuse (36, 38) de manière à y amener les goutteurs les uns après les autres,
- fixer à chaud lesdits goutteurs (4) à la paroi intérieure du tuyau (1) au fur et à mesure de sa formation, la solidarisation permettant de faire progresser le fil et les goutteurs en même temps que le tuyau, et
- refroidir ledit tuyau (1) et percer celui-ci au droit de chaque goutteur (4) pour le faire communiquer avec l'extérieur, caractérisé en ce qu'il consiste à :
- faire progresser lesdits goutteurs (4) dans ladite extrudeuse (36, 38) sur une chenille (43) traversant longitudinalement celle-ci et s'étendant sensiblement entre l'entrée de cette extrudeuse et un point où lesdits goutteurs (4) adhèrent à la paroi intérieure dudit tuyau (1); et

     faire cheminer ladite chenille (43) à une vitesse sensiblement égale à la vitesse d'extrusion dudit tuyau (1).

**13.** Procédé suivant la revendication 12, caractérisé en ce qu'il consiste également à presser lesdits goutteurs (4) dans ladite paroi sur une distance prédéterminée à l'aide de ladite chenille (43).

**14.** Procédé de fabrication d'un tuyau d'irrigation goutte-à-goutte consistant à :

- fabriquer des goutteurs (4),
- rendre lesdits goutteurs (4) solidaires longitudinalement d'un fil (16) en les positionnant de distance en distance le long de celui-ci,
- introduire ledit fil (16) à l'intérieur dudit tuyau (1) pendant que celui-ci est formé dans une extrudeuse (36, 38) de manière à y amener les goutteurs les uns après les autres,

- fixer à chaud lesdits goutteurs (4) à la paroi intérieure du tuyau (1) au fur et à mesure de sa formation, la solidarisation permettant de faire progresser le fil (16) et les goutteurs (4) en même temps que le tuyau, et

- refroidir ledit tuyau (1) et percer celui-ci au droit de chaque goutteur (4) pour le faire communiquer avec l'extérieur, caractérisé en ce qu'il consiste également à

- former une queue d'attente (30) constituée d'un nombre prédéterminé de goutteurs (4) après leur solidarisation dudit fil (16) et préalablement à leur introduction dans ledit tuyau (1).

15. Procédé suivant la revendication 14, caractérisé en ce qu'il consiste également à :

- surveiller le nombre des goutteurs (4) placés dans ladite queue d'attente (30); et

- faire varier la vitesse d'entrée des goutteurs (4) dans ladite queue d'attente (30) en fonction de ce nombre.

16. Goutteur pour un tuyau d'irrigation goutte-à-goutte (1) fabriqué par le procédé tel que défini dans l'une quelconque des revendications 1 à 13, caractérisé en ce qu'il comprend un corps creux de forme sensiblement parallélépipédique et des moyens (6, 7) formé dans ce corps pour obtenir un passage dans lequel de l'eau peut s'écouler avec un faible débit prédéterminé, caractérisé en ce qu'il présente également des moyens de coincement (9) pour un fil (16) duquel il peut être rendu solidaire pour permettre sa progression durant la fabrication du tuyau.

17. Goutteur suivant la revendication 16, caractérisé en ce que lesdits moyens de coincement (9) comprennent au moins une patte venue de formage avec le corps du goutteur (4) du côté de ce corps opposé à la paroi (5) par laquelle il adhérera audit tuyau (1) et transversalement à la direction de progression dudit fil (16) pendant la formation dudit tuyau (1), ladite patte étant pourvue d'une encoche (9) dont la largeur est inférieure au diamètre dudit fil (16).

18. Goutteur suivant la revendication 17, caractérisé en ce que la largeur de ladite encoche (9) est sensiblement de 0,8 fois le diamètre dudit fil (16).

19. Procédé suivant la revendication 4, caractérisé en ce que d est le pas avec lequel lesdits goutteurs se répètent dans le sens longitudinal du tuyau (1), en ce que la longueur de ladite première chenille (15) est inférieure à d et en ce que la bobine (17) est dévidée à la défilée.

20. Procédé suivant la revendication 19, caractérisé en ce que la progression du fil (16) lorsqu'aucun goutteur (4) n'est présent dans la première chenille (15) est assurée par la traction exercée sur le fil par le tuyau via les goutteurs qui y sont fixés.

**Patentansprüche**

1. Verfahren zum Herstellen eines Schlauchs (1) zur tropfenweisen Bewässerung, das darin besteht:

- Tropfeinrichtungen (4) herzustellen,

- die Tropfeinrichtungen (4) längs einer Faser (16) zu befestigen, indem sie längs dieser Faser (16) in gegenseitigem Abstand angeordnet werden,

- die Faser (16) in den Schlauch (1) einzuführen, während dieser in einer Strangpresse oder einer Strangpreßstation (36, 38) geformt wird, derart, daß ihm die Tropfeinrichtungen (4) nacheinander zugeführt werden,

- die Tropfeinrichtungen (4) an der Innenwand des Schlauchs (1) nach Maßgabe seiner Bildung heißzubefestigen, wobei die Befestigung ermöglicht, die Faser (16) und die Tropfeinrichtungen gleichzeitig mit dem Schlauch (1) voranzutreiben, und

- den Schlauch (1) abzukühlen und am Ort jeder Tropfeinrichtung (4) zu durchlochen, damit diese mit der äußeren Umgebung in Verbindung steht,

- wobei das Verfahren dadurch gekennzeichnet ist, daß es außerdem darin besteht:

- die Tropfeinrichtungen (4) während ihrer Herstellung mit Klemmitteln (9) zu versehen und

- die Faser (16) in die Klemmittel (9) einzuschieben, um eine Befestigung der Tropfeinrichtungen (4) an der Faser (16) zu erreichen, bevor sie in den Schlauch (1) eingeführt wird.

2. Verfahren nach Anspruch 1, dadurch gekennzeichnet, daß die Klemmittel (9) wenigstens einen Ansatz aufweisen, der sich bei der Formung des Körpers der Tropfeinrichtung (4) auf derjenigen Seite dieses Körpers, die der Wand (5), mit der er am Schlauch (1) anhaften wird, gegenüberliegt, und quer zur Vorschubrichtung der Faser (16) während der Bildung des Schlauchs (1) ergibt, wobei der Ansatz mit einer Kerbe (9) versehen ist, deren Breite kleiner als der Durchmesser der Faser (16) ist.

3. Verfahren nach Anspruch 2, dadurch gekennzeichnet, daß die Breite der Kerbe (9) im wesentlichen auf den 0,8fachen Durchmesser der Faser festgelegt ist.

4. Verfahren nach einem der Ansprüche 2 und 3, dadurch gekennzeichnet, daß es außerdem darin besteht:

- die Tropfeinrichtungen (4) nacheinander einem ersten Raupenbilder (15) zuzuführen, der einen oberen Riemen (15a) und zwei untere Riemen (15b, 15c) enthält, die zu gekoppelten Bewegungen angetrieben werden, wobei die unteren Riemen (15b, 15c) unter dem oberen Riemen (15a) nebeneinander angeordnet sind und die Tropfeinrichtungen (4) in den Zwischenraum zwischen diesen Riemen eingesetzt sind,
- die Faser von einer Spule (17) abzuwickeln, indem sie auf einem Teil des Umfangs eines Einschubrades (18) geführt wird, dessen Umfangskante (21) am Rand (22) konkav ist und in den Zwischenraum zwischen den beiden unteren Riemen hineinragt, und das zu einer Drehbewegung angetrieben wird, die auf die Bewegungen der Riemen (15a, 15b, 15c) abgestimmt ist,
- wobei die Tropfeinrichtungen (4) in dem Zwischenraum wandern, indem sie in der Weise angeordnet werden, daß die Kerbe (9) mit der Umfangskante (21) in der Weise überlappt, daß die Faser (16) in der Kerbe jeder Tropfeinrichtung festgeklemmt wird, wenn diese über das Rad (18) läuft.

5. Verfahren nach Anspruch 4, dadurch gekennzeichnet, daß dann, wenn 1 die Länge jeder Tropfeinrichtung (4) und d die Schrittweite ist, in der die Tropfeinrichtungen in Längsrichtung des Schlauchs (1) nacheinander angeordnet sind, die Länge des ersten Raupenbilders (15) im wesentlichen gleich 1 + d ist.

6. Verfahren nach einem der Ansprüche 1 bis 5, dadurch gekennzeichnet, daß es außerdem darin besteht, eine Warteschlange (30) zu bilden, die aus einer vorgegebenen Anzahl von Tropfeinrichtungen (4) nach ihrer Befestigung an der Faser (16) und vor ihrer Einführung in den Schlauch (1) gebildet ist.

7. Verfahren sowohl nach Anspruch 4 und Anspruch 6, dadurch gekennzeichnet, daß es außerdem darin besteht:

- die Anzahl der Tropfeinrichtungen (4), die in der Warteschlange (30) angeordnet sind, zu überwachen; und
- die Wandergeschwindigkeit der Tropfeinrichtungen (4) in dem ersten Raupenbilder (15) und derjenigen der Faser (16) auf dem Rad (18) in Abhängigkeit von dieser Anzahl zu ändern.

8. Verfahren nach Anspruch 7, dadurch gekennzeichnet, daß die Wandergeschwindigkeit gleich der Strangpreßgeschwindigkeit des Schlauchs (1) ist, vermindert oder erhöht um einen in Abhängigkeit von der Anzahl der Tropfeinrichtungen in der Warteschlange (30) definierten Korrekturfaktor.

9. Verfahren nach einem der Ansprüche 5 bis 8, dadurch gekennzeichnet, daß es außerdem darin besteht:

- die Tropfeinrichtungen (4) im ersten Raupenbilder (15) mit einer Geschwindigkeit einzuführen, die im wesentlichen gleich $V = V_1 \times I/d$ ist, wobei $V_1$ die Vortriebsgeschwindigkeit ist, mit der der Schlauch (1) dem Abkühlungsvorgang unterworfen wird.

10. Verfahren nach einem der Ansprüche 1 bis 9, dadurch gekennzeichnet, daß es außerdem darin besteht:

- die Tropfeinrichtungen (4) in der Strangpresse (36, 38) auf einem zweiten Raupenbilder (43) voranzutreiben, der diese in Längsrichtung durchquert und sich im wesentlichen zwischen dem Eingang dieser Strangpresse und einem Punkt erstreckt, an dem die Tropfeinrichtungen (4) an der Innenwand des Schlauchs (1) anhaften; und
- dem Raupenbilder (43) mit einer Geschwindigkeit zu bewegen, die im wesentlichen gleich der Strangpreßgeschwindigkeit des Schlauchs (1) ist.

11. Verfahren nach Anspruch 10, dadurch gekennzeichnet, daß es außerdem darin besteht, die Tropfeinrichtungen (4) mit Hilfe des zweiten Raupenbilders (43) auf einer vorgegebenen Strecke gegen die Wand zu pressen.

12. Verfahren zum Herstellen eines Schlauchs zur tropfenweisen Bewässerung, das darin besteht:

- Tropfeinrichtungen (4) herzustellen,
- die Tropfeinrichtungen (4) längs einer Faser (16) zu befestigen, indem sie längs dieser Faser (16) in gegenseitigem Abstand angeordnet werden,
- die Faser (16) in den Schlauch (1) einzuführen, während dieser in einer Strangpresse (36, 38) geformt wird, derart, daß ihm die Tropfeinrichtungen nacheinander zugeführt werden,
- die Tropfeinrichtungen (4) an der Innenwand des Schlauchs (1) nach Maßgabe seiner Bildung heißzubefestigen, wobei die Befestigung ermöglicht, die Faser und die Tropfeinrichtungen gleichzeitig mit dem Schlauch voranzutreiben, und
- den Schlauch (1) abzukühlen und am Ort jeder Tropfeinrichtung (4) zu durchlochen, um diese mit der äußeren Umgebung zu verbinden, dadurch gekennzeichnet, daß es darin besteht:

- die Tropfeinrichtungen (4) in der Strangpresse (36, 38) auf, einem Raupenbilder (43) voranzutreiben, der diese in Längsrichtung durchquert und sich im wesentlichen zwischen dem Eingang dieser Strangpresse und einem Punkt erstreckt, an dem die Tropfeinrichtungen (4) an der Innenwand des Schlauchs (1) haften; und

Bewegen des Raupenbilders (43) mit einer Geschwindigkeit, die im wesentlichen gleich der Strangpreßgeschwindigkeit des Schlauchs (1) ist.

13. Verfahren nach Anspruch 12, dadurch gekennzeichnet, daß es außerdem darin besteht, die Tropfeinrichtungen (4) mit Hilfe des Raupenbilders (43) auf einer vorgegebenen Strecke gegen die Wand zu pressen.

14. Verfahren zum Herstellen eines Schlauchs zur tropfenweisen Bewässerung, das darin besteht:

- Tropfeinrichtungen (4) herzustellen,
- die Tropfeinrichtungen (4) längs einer Faser (16) zu befestigen, indem sie längs dieser Faser (16) in gegenseitigem Abstand angeordnet werden,
- die Faser (16) in den Schlauch (1) einzuführen, während dieser in einer Strangpresse (36, 38) gebildet wird, derart, daß ihm die Tropfeinrichtungen nacheinander zugeführt werden,
- die Tropfeinrichtungen (4) an der Innenwand des Schlauchs (1) nach Maßgabe seiner Bildung heißzubefestigen, wobei die Befestigung ermöglicht, die Faser (16) und die Tropfeinrichtungen (4) gleichzeitig mit dem Schlauch voranzutreiben, und
- den Schlauch (1) abzukühlen und am Ort jeder Tropfeinrichtungen (4) zu durchlochen, um sie mit der äußeren Umgebung zu verbinden, dadurch gekennzeichnet, daß es außerdem darin besteht:
- eine Warteschlange (30) zu bilden, die aus einer vorgegebenen Anzahl von Tropfeinrichtungen (4) nach ihrer Befestigung an der Faser (16) und vor ihrem Einführen in den Schlauch (1) gebildet wird.

15. Verfahren nach Anspruch 14, dadurch gekennzeichnet, daß es außerdem darin besteht:

- die Anzahl der Tropfeinrichtungen (4), die in der Warteschlange (30) angeordnet sind, zu überwachen; und
- die Eintrittsgeschwindigkeit der Tropfeinrichtungen (4) in die Warteschlange (30) in Abhängigkeit von dieser Anzahl zu ändern.

16. Tropfeinrichtung für einen Schlauch (1) zur tropfenweisen Bewässerung, der mit dem Verfahren hergestellt ist, das in einem der Ansprüche 1 bis 13 definiert ist, dadurch gekennzeichnet, daß sie einen Hohlkörper mit im wesentlichen parallelepipedischer Form sowie Mittel (6, 7), die in diesem Körper gebildet sind, um einen Durchlaß zu erhalten, in dem Wasser mit einem vorgegebenen geringen Durchsatz fließen kann, umfaßt, dadurch gekennzeichnet, daß sie außerdem Klemmittel (9) für eine Faser (16) aufweist, an der sie befestigt werden kann, um ihren Vortrieb während der Herstellung des Schlauchs zu ermöglichen.

17. Tropfeinrichtung nach Anspruch 16, dadurch gekennzeichnet, daß die Klemmittel (9) wenigstens einen Ansatz aufweisen, der sich bei der Formung des Körpers der Tropfeinrichtung (4) auf derjenigen Seite dieses Körpers, die der Wand (5), mit der er am Schlauch (1) haften wird, gegenüberliegt, und quer zur Vortriebsrichtung der Faser (16) während der Bildung des Schlauchs (1) ergibt, wobei der Ansatz mit einer Kerbe (9) versehen ist, deren Breite kleiner als der Durchmesser der Faser (16) ist.

18. Tropfeinrichtung nach Anspruch 17, dadurch gekennzeichnet, daß die Breite der Kerbe (9) im wesentlichen gleich dem 0,8fachen Durchmesser der Faser (16) ist.

19. Verfahren nach Anspruch 4, dadurch gekennzeichnet, daß d die Schrittweite ist, mit der die Tropfeinrichtungen in Längsrichtung des Schlauchs (1) aufeinanderfolgen, daß die Länge des ersten Raupenbilders (15) kleiner als d ist und daß die Spule (17) durch Abziehen der Faser abgewickelt wird.

20. Verfahren nach Anspruch 19, dadurch gekennzeichnet, daß der Vortrieb der Faser (16) dann, wenn im ersten Raupenbilder (15) keine Tropfeinrichtung (4) vorhanden ist, durch den Zug sichergestellt wird, der auf die Faser von dem Schlauch über die daran befestigten Tropfeinrichtungen ausgeübt wird.

**Claims**

1. Manufacturing method for a drip irrigation tube (1), consisting of:

- manufacturing dripper units (4),
- attaching said dripper units (4) longitudinally to a thread (16) by positioning them at intervals along the latter,
- introducing said thread (16) inside said tube (1) while the latter is being formed in an extruder or extrusion station (36, 38) so as to draw the dripper units (4) therein one after the other,

- heat welding said dripper units (4) to the inner wall of the tube (1) during its formation, the resulting attachment allowing the thread (16) and the dripper units to be moved forward at the same time as the tube (1), and
- cooling said tube (1) and perforating the latter at right angles to each dripper unit (4) in order to make it communicate with the exterior,
- said method being characterized in that it also consists of:
- providing said dripper units (4) with clamping means (9) during manufacturing thereof, and
- inserting said thread (16) into said clamping means (9) in order to obtain attachment of said dripper units (4) to said thread (16) before introduction thereof into said tube (1).

2. Method according to claim 1, characterized in that said clamping means (9) include at least one lug moulded to the body of the dripper unit (4) on the side of said body opposite the wall (5) via which it will subsequently be attached to said tube (1) and at right angles to the direction of advancement of said thread (16) during formation of said tube (1), said lug being provided with a notch (9) whose width is smaller than the diameter of said thread (16).

3. Method according to claim 2, characterized in that the width of said notch (9) is fixed at substantially 0.8 times the diameter of said thread (16).

4. Method according to any one of claims 2 or 3, characterized in that it also consists of:

   - drawing said dripper units (4) in succession into a first caterpillar (15) including an upper belt (15a) and two lower belts (15b, 15c) driven by conjugated movements, said lower belts (15b, 15c) being placed side by side below the upper belt (15a) and said dripper units (4) being inserted in the gap between said belts,
   - unreeling said thread from a spool (17) by passing it over a portion of the periphery of an insertion wheel (18) whose peripheral rim (21) is concave over the edge (22) and which projects into said gap between the two lower belts and which is driven by a rotational movement coordinated with the movement of said belts (15a, 15b, 15c),
   - said dripper units (4) proceeding in said gap and being positioned so that said notch (9) overlaps said peripheral edge (21) so that said thread (16) is caught in the notch of each dripper unit when the latter passes above said wheel (18).

5. Method according to claim 4, characterized in that if 1 is the length of each dripper unit (4) and d the pitch with which said dripper units are repeated in the longitudinal direction of the tube (1), the length of said first caterpillar (15) is substantially equal to 1 + d.

6. Method according to any one of claims 1 to 5, characterized in that it also consists of forming a waiting line (30) formed of a predetermined number of dripper units (4), after attachment thereof to said thread (16) and prior to introduction thereof into said tube (1).

7. Method according to claims 4 and 6 taken together, characterized in that it also consists of:

   - monitoring the number of dripper units (4) placed in said waiting line (30); and
   - varying the speed of progression of the dripper units (4) in said first caterpillar (15) and that of said thread (16) on said wheel (18) as a function of said number.

8. Method according to claim 7, characterized in that said speed of progression is equal to the extrusion speed of said tube (1) decreased or increased by a correction factor defined as a function of said number of dripper units in the waiting line (30).

9. Method according to any one of claims 5 to 8, characterized in that it also consists of:

   - introducing said dripper units (4) into said first caterpillar (15) at a speed substantially equal to $V=V_1*1/d$, $V_1$ being the speed of progression with which said tube (1) undergoes said cooling operation.

10. Method according to any one of claims 1 to 9, characterized in that it also consists of:

    - causing said dripper units (4) to progress into said extruder (36, 38) on a second caterpillar (43) which passes longitudinally through the latter and extends substantially between the inlet of said extruder and a point where said dripper units (4) adhere to the inner wall of said tube (1); and
    - causing said caterpillar to progress at a speed substantially equal to the extrusion speed of said tube (1) .

11. Method according to claim 10, characterized in that it also consists of pressing said dripper units (4) into said wall over a predetermined distance via said second caterpillar (43).

12. Method for manufacturing a drip irrigation tube consisting of:

- manufacturing dripper units (4),
- attaching said dripper units (4) longitudinally to a thread (16) by positioning them at intervals along the latter,
- introducing said thread (16) inside said tube (1) while the latter is being formed in an extruder (36, 38) so as to draw the dripper units (4) therein one after the other,
- heat welding said dripper units (4) to the inner wall of the tube (1) during its formation, the resulting attachment allowing the thread and the dripper units to be moved forward at the same time as the tube, and
- cooling said tube (1) and perforating the latter at right angles to each dripper unit (4) in order to allow it communicate with the exterior, characterized in that it consists of:
- causing said dripper units (4) to progress into said extruder (36, 38) on a caterpillar (43) which passes longitudinally through the latter and extends substantially between the inlet of said extruder and a point where said dripper units (4) adhere to the inner wall of said tube (1); and
- moving said caterpillar (43) along at a speed substantially equal to the extrusion speed of said tube (1) .

13. Method according to claim 12, characterized in that it also consists in pressing said dripper units (4) into said wall over a predetermined distance via said caterpillar (43).

14. Method for manufacturing a dripper irrigation tube, consisting of:

- manufacturing dripper units (4),
- attaching said dripper units (4) longitudinally to a thread (16) by positioning them at intervals along the latter,
- introducing said thread (16) inside said tube (1) while the latter is being formed in an extruder (36, 38) so as to draw the dripper units (4) therein one after the other,
- heat welding said dripper units (4) to the inner wall of the tube (1) during its formation, the resulting attachment allowing the thread (16) and the dripper units to be moved forward at the same time as the tube (1), and
- cooling said tube (1) and perforating the latter at right angles to each dripper unit (4) in order to let it communicate with the exterior, characterized in that it also consists of:
- forming a waiting line (30) formed of a predetermined number of dripper units (4) after attachment thereof to said thread (16) and prior to introduction thereof into said tube (1).

15. Method according to claim 14, characterized in that it also consists of:

- monitoring the number of dripper units (4) placed in said waiting line (30); and
- varying the speed of entry of dripper units (4) into said waiting line (30) as a function of said number.

16. Dripper unit for a drip irrigation tube (1) manufactured by the method as defined in any one of claims 1 to 13, characterized in that it includes a hollow body of substantially parallelepiped shape and means (6, 7) formed in said body for providing a passage into which water can flow at a predetermined low flow rate, characterized in that it also has clamping means (9) for a thread (16) to which it. can be attached to allow its progression during manufacturing of the tube.

17. Dripper unit according to claim 16, characterized in that said clamping means (9) include at least one lug moulded to the body of the dripper unit (4) on the side of said body opposite to the wall (5) via which it will be attached to said tube (1) and at right angles to the direction of progression of said thread (16) during the formation of said tube (1), said lug being provided with a notch (9) whose width is less than the diameter of said thread (16).

18. Dripper unit according to claim 17, characterized in that the width of said notch (9) is substantially 0.8 times the diameter of said thread (16).

19. Method according to claim 4, characterized in that d is the pitch with which said dripper units are repeated in the longitudinal direction of the tube (1), in that the length of said first caterpillar (15) is less than d and in that the spool (17) is unreeled by flyer pay off.

20. Method according to claim 19, characterized in that the progression of said thread (16) when no dripper unit (4) is present in the first caterpillar (15) is assured by the traction exerted on the thread by the tube via the dripper units which are attached thereto.

Fig. 1

Fig. 2

Fig. 3A

Fig. 4

Fig. 3B

Fig. 5

# Fig. 6

EP 0 872 172 B1

Fig. 7